# DEMANDE DE BREVET EUROPEEN

(11) **EP 3 972 094 A1**
(43) Date de publication de la demande: **23.03.2022**
(21) Numéro de dépôt: 21197451.4
(22) Date de dépôt: 17.09.2021
(51) Int. Cl.: H02K 9/22, H02K 9/06

(54) **MOTEUR ÉLECTRIQUE FERROVIAIRE COMPRENANT UN DISPOSITIF DE REFROIDISSEMENT ET VÉHICULE FERROVIAIRE ASSOCIÉ**

(30) Priorité: 17.09.2020 FR 2009420
(71) Demandeur: ALSTOM Transport Technologies, 93400 Saint-Ouen (FR)
(72) Inventeur: FAKAM TCHAKOUE, Mathias, 25410 ROUTELLE (FR); SOUGH, Mohamed-Laid, 25320 TORPES (FR); SCHERER, Michel, 25320 GRANDFONTAINE (FR); MARNIAU, Pierre-Nicolas, 25000 BESANCON (FR)
(74) Mandataire: Lavoix

(57) **Abrégé**

Le moteur électrique (22) comprenant un rotor (32), un stator (34), un dispositif de refroidissement (36) et un bâti (30),
le rotor (32) comprenant au moins un orifice (90) tubulaire traversant s'étendant globalement parallèlement à l'axe de rotation (R) du rotor (32), et le dispositif de refroidissement (36) comprenant au moins un cylindre plein (92) inséré dans l'au moins un orifice (90) tubulaire traversant et s'étendant d'une extrémité (32A) du rotor (32) à l'autre extrémité (32B) en étant pris en sandwich entre les deux parois de fixation (64, 66) des éléments de refroidissement (60, 62).

## Description

La présente invention concerne un moteur électrique comprenant un dispositif de refroidissement et un véhicule ferroviaire comprenant un tel moteur électrique.

Dans le domaine des moteurs électriques, notamment pour véhicule ferroviaire, il est connu d'utiliser des dispositifs de refroidissement faisant circuler un fluide externe, par exemple de l'air extérieur au moteur, dans le moteur afin de refroidir un rotor et/ou un stator du moteur.

On connaît notamment de EP3599707 un moteur électrique comprenant un dispositif de refroidissement. Le dispositif de refroidissement comprend deux éléments de refroidissement disposés chacun à l'une des extrémités respectives du rotor, formant chacun une paroi froide, et le bâti du moteur comprend au moins un orifice de refroidissement respectif pour chaque élément de refroidissement.

Cependant, un tel dispositif ne donne pas entière satisfaction. En effet, avec une paroi froide vissée sur la plaque de serrage du rotor, il est difficile d'extraire les calories du centre du rotor. L'échange de calories entre le rotor et la paroi froide se fait essentiellement par les plaques de fixation des parois froides au rotor. Ces calories sont ensuite évacuées de la paroi vers le milieu environnant par convection.

L'un des buts de la présente invention est de remédier aux inconvénients précités en proposant un moteur dont le refroidissement est plus efficace.

A cet effet, l'invention propose un moteur comprenant un rotor, un stator, un dispositif de refroidissement et un bâti,
le bâti définissant un espace intérieur de réception du rotor, du stator et du dispositif de refroidissement, le bâti comprenant au moins un orifice de refroidissement reliant l'espace intérieur à un espace extérieur au bâti, le rotor comprenant deux extrémités opposées suivant un axe de rotation du rotor,
le dispositif de refroidissement comprenant au moins un élément de refroidissement disposé à chacune des extrémités du rotor, chaque élément de refroidissement comprenant une paroi de fixation au rotor, solidaire en rotation du rotor, et une paroi de refroidissement s'étendant, le long de l'axe de rotation du rotor, depuis la paroi de fixation jusqu'à une extrémité libre de l'élément de refroidissement, la paroi de refroidissement délimitant un volume interne qu'elle entoure au moins partiellement et comprenant une face interne en regard du ou de l'un des orifices de refroidissement et propre à être en contact avec un flux d'air traversant l'orifice de refroidissement et une face externe en regard du stator, opposée à la face interne, la face interne et la face externe s'étendant depuis la paroi de fixation jusqu'à l'extrémité libre,
caractérisé en ce que le rotor comprend au moins un orifice tubulaire traversant s'étendant globalement parallèlement à l'axe de rotation du rotor, et en ce que le dispositif de refroidissement comprend au moins un cylindre plein inséré dans l'au moins un orifice tubulaire traversant et s'étendant d'une extrémité du rotor à l'autre extrémité en étant pris en sandwich entre les deux parois de fixation des éléments de refroidissement.

Grâce au dispositif de l'invention, les calories sont évacuées sur toute la longueur du rotor. Les calories sont évacuées par conduction.

Suivant des modes particuliers de réalisation, l'invention présente l'une ou plusieurs des caractéristiques suivantes, prises seules ou selon toutes les combinaisons techniquement envisageables :
- chaque cylindre plein est réalisé en un matériau présentant une conductivité thermique supérieure à 240 W m⁻¹ K⁻¹ ;
- le rotor comprend au moins une pluralité d'orifices tubulaires traversants s'étendant globalement parallèlement à l'axe de rotation du rotor, et en ce que le dispositif de refroidissement comprend au moins un cylindre creux inséré dans l'un des orifices tubulaires traversants et s'étendant d'une extrémité du rotor à l'autre extrémité et pris en sandwich entre les deux parois de fixation des éléments de refroidissement ;
- chaque orifice tubulaire traversant du rotor est comblé par un cylindre respectif, plein ou creux ;
- le moteur comprend au moins deux roulements entourant l'arbre de part et d'autre du rotor suivant l'axe de rotation du rotor, chaque roulement étant disposé dans le volume interne de la paroi de refroidissement respective ;
- le bâti comprend deux parois latérales externes opposées s'étendant globalement perpendiculairement à l'axe de rotation du rotor, au moins une paroi circonférentielle longitudinale externe, s'étendant autour de l'axe de rotation du rotor, deux parois latérales internes opposées s'étendant globalement perpendiculairement à l'axe de rotation du rotor, et au moins une paroi circonférentielle longitudinale interne, s'étendant autour de l'axe de rotation du rotor, et dans lequel les parois latérales externes et circonférentielle longitudinale externe définissent avec les parois latérales internes et circonférentielle longitudinale interne au moins un canal de refroidissement ;
- au moins l'un des éléments de refroidissement présente une extrémité libre disposée en regard de la paroi latérale externe du bâti respective et une extrémité libre en regard de la paroi latérale interne respective, et dans lequel l'extrémité libre en regard de

la paroi latérale interne et l'extrémité libre en regard de la paroi latérale externe définissent entre elles au moins un canal de refroidissement ;
- l'extrémité libre en regard de la paroi latérale interne et l'extrémité libre en regard de la paroi latérale externe définissent entre elles une pluralité de canaux de refroidissement séparés par des lames ; et
- les lames sont biseautées, avec une petite base disposée à l'opposé du rotor suivant l'axe de rotation du rotor et une grande base disposée du côté du rotor.

L'invention a également pour objet un véhicule ferroviaire comprenant au moins un moteur électrique tel que décrit ci-dessus.

L'invention sera mieux comprise à la lecture de la description qui va suivre, donnée uniquement à titre d'exemple et faite en se référant aux dessins annexés sur lesquels :
- [Fig.1] la figure 1 est une représentation schématique partielle d'un véhicule ferroviaire comprenant deux bogies équipés chacun d'un moteur électrique selon un mode de réalisation de l'invention, ;
- [Fig.2] la figure 2 est une section selon un premier plan d'une partie du moteur électrique de la figure 1, le moteur comprenant un stator, un rotor et un dispositif de refroidissement, le premier plan étant défini par une première direction X-X' parallèle à l'axe de rotation d'un rotor du moteur et par une deuxième direction Y-Y' perpendiculaire à la première direction X-X' ;

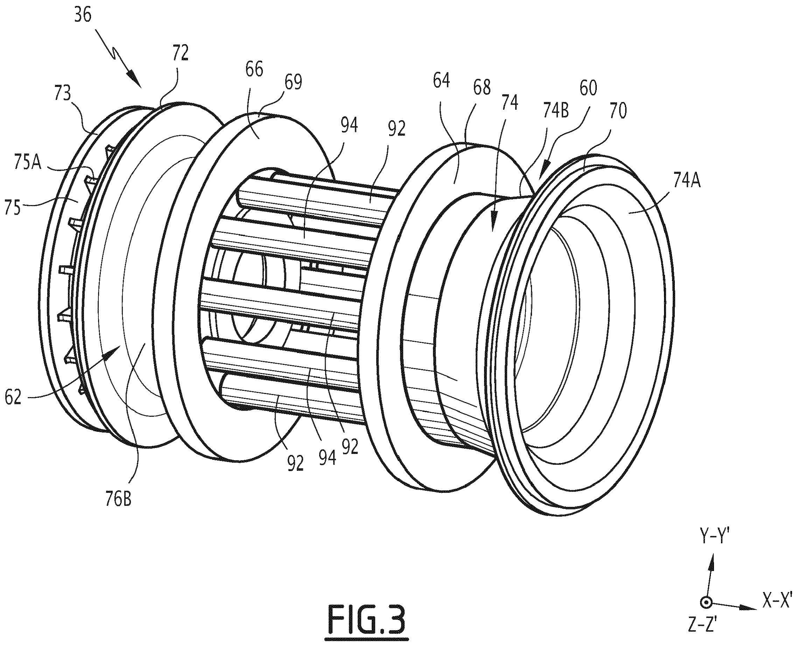

- [Fig.3] la figure 3 est une vue en perspective du dispositif de refroidissement du moteur électrique de la figure 1, et

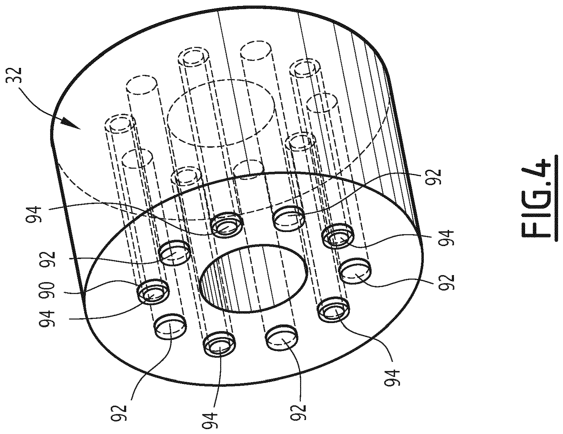

- [Fig.4] la figure 4 est une vue en perspective du rotor du moteur électrique de la figure 1.

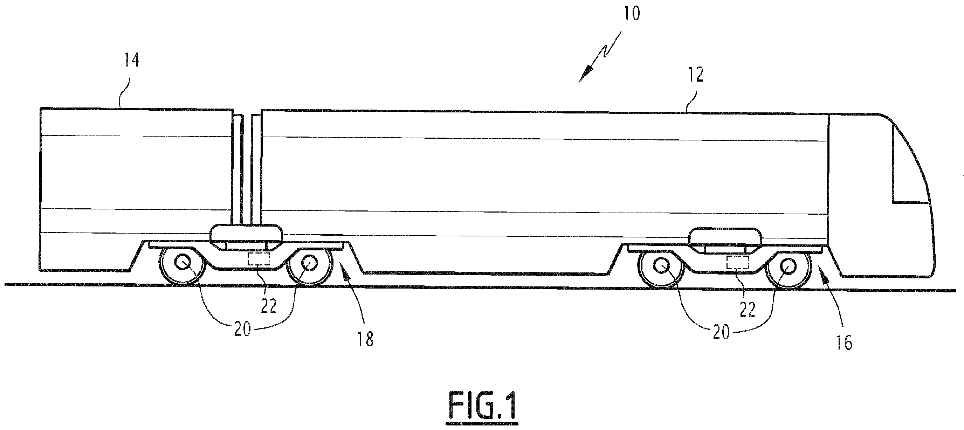

On a représenté sur la figure 1 un véhicule ferroviaire 10 comprenant une pluralité de voitures et notamment au moins deux voitures 12, 14 visibles sur la figure 1.

Sur la figure 1, la voiture 12 est une voiture pilote et la voiture 14 est une voiture remorque.

La voiture 12 est portée par un premier bogie dédié 16 et par un deuxième bogie 18 portant à la fois la voiture 12 et la voiture 14.

Dans l'exemple de la figure 1, chaque bogie 16, 18 comprend deux essieux 20 et un moteur électrique 22 propre à entraîner en rotation un ou les deux essieux 20 du bogie 16, 18.

En variante, tous les bogies ne sont pas motorisés et seulement certains des bogies 16, 18 du véhicule ferroviaire 10 comprennent un moteur électrique 22.

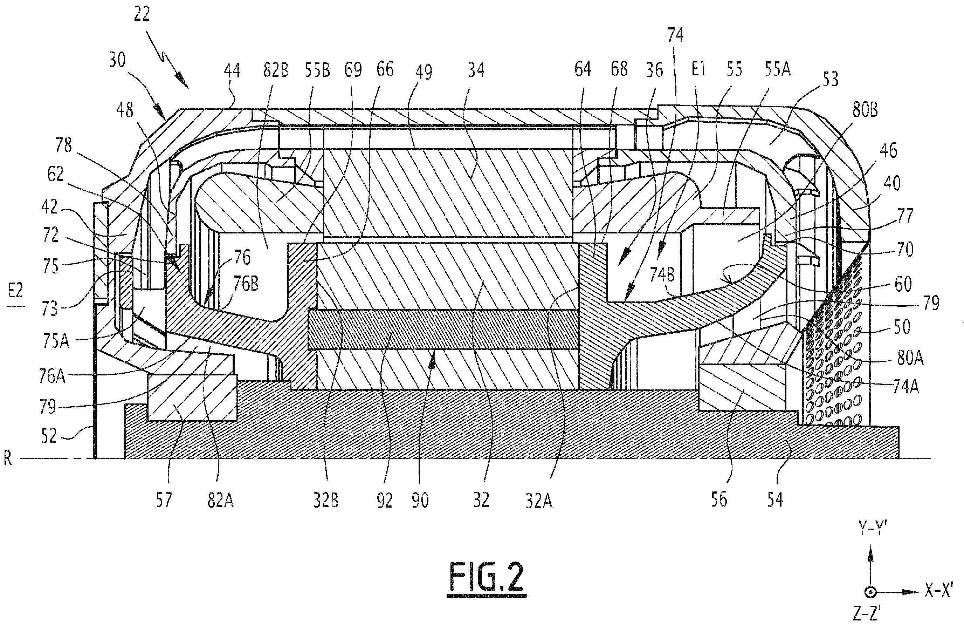

Sur la figure 2, pour des raisons de simplicité, seule la moitié du moteur électrique 22 est représentée, l'autre moitié étant sensiblement symétrique de la moitié représentée par rapport à la direction X-X'.

Le moteur électrique 22 est configuré pour atteindre une vitesse nominale supérieure à 3000 tours par minutes, par exemple comprise entre 3500 tours par minutes et 4500 tours par minutes.

On entend par vitesse nominale, une vitesse normale de fonctionnement lorsque le véhicule ferroviaire 10 circule entre deux stations à une vitesse de croisière.

Le moteur électrique 22 comprend un bâti 30, ou carter, définissant un espace intérieur E1 du moteur 22, ainsi qu'un rotor 32, un stator 34 et un dispositif de refroidissement 36 logés dans l'espace intérieur E1.

Le bâti 30 comprend deux parois latérales externes opposées 40, 42 s'étendant globalement perpendiculairement à la direction X-X', qui correspond à un axe R de rotation du rotor 32, et une paroi circonférentielle longitudinale externe 44, s'étendant autour de l'axe R.

Le bâti 30 comprend deux parois latérales internes opposées 46, 48 s'étendant globalement perpendiculairement à la direction X-X', et une paroi circonférentielle longitudinale interne 49, s'étendant autour de l'axe R.

Le bâti 30 présente par exemple une forme cylindrique, parallélépipédique, ou toute forme techniquement envisageable.

Les parois latérales externes 40, 42 et longitudinale externe 44 définissent l'espace intérieur E1.

Chaque paroi latérale externe 40, 42 comprend au moins un, de préférence une pluralité d'orifices de refroidissement 50, 52 reliant l'espace intérieur E1 à un espace E2 extérieur au bâti 30.

En particulier, la paroi latérale externe 42 du côté opposé à la saillie d'un arbre de rotation 54 du moteur électrique 22 est globalement perpendiculaire à l'axe de rotation R du rotor 32 et les orifices 52 sont répartis sur une surface globalement en forme de disque.

La paroi latérale externe 42 du côté opposé à la saillie de l'arbre de rotation 54 est le côté d'entrée d'air dans le moteur 22, comme cela sera détaillé plus loin.

En particulier, la paroi latérale externe 40 du côté duquel l'arbre de rotation 54 fait saillie hors du bâti 30 comprend une partie présentant une forme tronconique autour de l'arbre 54, et cette paroi latérale externe 40 est globalement perpendiculaire à l'axe de rotation R du rotor 32 de part et d'autre de la partie tronconique.

Les orifices 50 sont de préférence répartis sur la partie tronconique de la paroi latérale externe 40.

La paroi latérale externe 40 du côté duquel l'arbre de rotation 54 fait saillie hors du bâti 30 est le côté de sortie d'air du moteur 22, comme cela sera détaillé plus loin.

Le diamètre de chaque orifice de refroidissement 50, 52 est par exemple compris entre 5 mm et 10 mm.

Les parois latérales externes 40, 42 et longitudinale externe 44 définissent avec les parois latérales internes 46, 48 et longitudinale interne 49 au moins un canal de refroidissement 53.

Avantageusement, les parois latérales externes 40, 42 et longitudinale externe 44 définissent avec les parois latérales internes 46, 48 et longitudinale interne 49 une pluralité de canaux de refroidissement 53, séparés par des cloisons radiales.

Le rotor 32 est monté solidaire en rotation sur l'arbre de rotation 54 et monté mobile en rotation autour de l'axe de rotation R par rapport au stator 34.

Le rotor 32 définit deux extrémités opposées 32A, 32B suivant l'axe de rotation R du rotor 32.

Le stator 34 entoure le rotor 32 parallèlement à l'axe de rotation R à l'intérieur du bâti 30 et il est coaxial au rotor 32.

Le stator 34 comprend des bobines 55 entourant le rotor 32.

Les bobines 55 comprennent deux têtes 55A, 55B entourant chacune une des extrémités opposées 32A, 32B du rotor 32 et s'étendent au-delà des extrémités 32A, 32B du rotor 32 suivant l'axe de rotation R du rotor 32.

Le moteur 22 comprend au moins deux roulements 56, 57 entourant l'arbre 54 de part et d'autre du rotor 32 suivant l'axe de rotation R du rotor 32.

De façon classique, le rotor 32 et le stator 34 permettent de transformer une énergie électrique en énergie mécanique délivrée par l'arbre 54 du rotor 32 et destinée à entraîner les essieux 20.

L'arbre de rotation 54 fait saillie d'un côté du bâti 30.

Le dispositif de refroidissement 36 comprend au moins un élément de refroidissement 60, 62 disposé à l'une des extrémités 32A, 32B du rotor 32.

Avantageusement, et comme représenté sur la figure 2, le dispositif de refroidissement comprend deux éléments de refroidissement 60, 62 disposés chacun à l'une des extrémités respective 32A, 32B du rotor 32.

Chaque élément de refroidissement 60, 62 comprend une paroi 64, 66 de fixation au rotor 32 et notamment de fixation à l'extrémité correspondante 32A, 32B du rotor 32.

Chaque paroi de fixation 64, 66 est solidaire en rotation du rotor 32 et s'étend suivant une direction radiale à l'axe de rotation R.

Chaque paroi de fixation 64, 66 comprend suivant la direction radiale à l'axe de rotation R du rotor 32 une extrémité radiale 68, 69 affleurant par rapport au rotor 32 suivant ladite direction radiale. L'extrémité radiale 68, 69 est disposée en regard du stator 34 et à proximité du stator 34, c'est-à-dire, par exemple, à une distance, mesurée suivant la direction radiale, inférieure à 5 mm, de préférence à 3 mm, par exemple comprise entre 1,5 mm et 3 mm. Chaque élément de refroidissement 60, 62 comprend également une extrémité libre 70, 72 située à l'opposé du rotor 32 suivant l'axe de rotation R du rotor 32.

De préférence, chaque paroi de fixation 64, 66 est assemblée au rotor 32 de façon étanche, par exemple par soudage, brasage ou frettage.

Chaque élément de refroidissement 60, 62 comprend également une paroi de refroidissement 74, 76 s'étendant, le long de l'axe de rotation R du rotor 32, depuis la paroi de fixation 64, 66 jusqu'à l'extrémité libre 70, 72 de l'élément de refroidissement.

Chaque extrémité libre 70, 72 est disposée en regard d'une des parois latérales internes 46, 48 du bâti 30.

En outre, l'élément de refroidissement 62 du côté opposé à la saillie de l'arbre de rotation 54 présente une extrémité libre 73 disposée en regard de la paroi latérale externe 42 du bâti 30.

L'extrémité libre 72 en regard de la paroi latérale interne 48 et l'extrémité libre 73 en regard de la paroi latérale externe 42 de l'élément de refroidissement 62 du côté opposé à la saillie de l'arbre de rotation 54 définissent entre elles au moins un canal de refroidissement 75, avantageusement une pluralité de canaux de refroidissement 75 séparés par des lames 75A.

Les lames 75A sont avantageusement biseautées, avec une petite base disposée à l'opposé du rotor suivant l'axe de rotation R du rotor et une grande base disposée du côté du rotor 32.

Les lames 75A permettent, avec la rotation des éléments de refroidissement 60, 62, de déplacer l'air dans l'espace intérieur E1 autour des bobines 55.

Chaque paroi latérale interne 46, 48 est munie d'une portion interne 77, 78, avantageusement cylindrique, s'étendant suivant l'axe de rotation R du rotor 32, et entourant les roulements 56, 57. La portion interne entoure les roulements 56, 57 globalement parallèlement à l'axe de rotation R du rotor 32.

Chaque paroi de refroidissement 74, 76 définit un volume interne 79 qu'elle entoure partiellement. Chaque paroi de refroidissement entoure partiellement le volume interne 79 qu'elle définit en étant globalement centrée sur l'axe de rotation R du rotor 32.

On entend par « définissant un volume interne 79 », le fait que la paroi de refroidissement 74, 76 est refermée sur elle-même et présente, par exemple, une forme de tronc de cône ou de cylindre.

Chaque paroi de refroidissement 74, 76 comprend une face interne 74A, 76A en regard des orifices de refroidissement 50, 52 et notamment en regard de chaque orifice de refroidissement 50, 52 auquel l'élément de refroidissement auquel elle appartient est associé. Chaque paroi de refroidissement 74, 76 est propre à être en contact avec un flux d'air traversant chaque orifice de refroidissement 50, 52 auquel l'élément de refroidissement auquel elle appartient est associé.

Chaque paroi de refroidissement 74, 76 comprend également une face externe 74B, 76B, opposée à la face interne 74A, 76A, en regard du stator 34.

La face interne 74A, 76A et la face externe 74B, 76B s'étendent depuis la paroi de fixation 64, 66 jusqu'à l'extrémité libre 70, 72.

Chaque paroi de refroidissement 74, 76 divise l'espace intérieur E1 en un espace primaire respectif 80A, 82A de réception d'air extérieur, relié aérauliquement aux orifices de refroidissement 50, 52, et un espace secondaire respectif 80B, 82B.

L'air compris dans chaque espace primaire 80A, 82A est en contact avec la face interne 74A, 76A correspondante et avec le ou chaque canal de refroidissement 53 défini par les parois latérales externes 40, 42 et longitudinale externe 44 avec les parois latérales internes 46, 48 et longitudinale interne 49 du bâti 30.

L'air compris dans chaque espace secondaire 80B, 82B est en contact avec la face externe 74B, 76B correspondante et le stator 34.

En d'autres termes, chaque paroi de refroidissement 74, 76 isole globalement l'air présent dans l'espace primaire 80A, 82A de l'air présent dans l'espace secondaire 80B, 82B.

Le moteur 22 est agencé de sorte que, lors de la rotation du rotor 32, l'air pénétrant dans l'espace intérieur E1 du côté opposé à la saillie de l'arbre 54 par le ou chaque orifice 52 de la paroi latérale externe 42 correspondante, et notamment dans l'espace primaire 82A correspondant, est entraîné dans le ou chaque canal de refroidissement 75 puis dans le ou chaque canal de refroidissement 53 défini par les parois latérales externes 40, 42 et longitudinale externe 44 avec les parois latérales internes 46, 48 et longitudinale interne 49 du bâti 30 pour ressortir du côté duquel l'arbre moteur 54 fait saillie hors du bâti 30 par le ou chaque orifice 50 de la paroi latérale externe 40 correspondante.

La face interne 74A, 76A et la face externe 74B, 76B sont globalement lisses et dépourvues d'éléments saillants et sont avantageusement des surfaces réglées globalement lisses et dépourvues d'éléments saillants.

On entend par surface réglée, une surface par chaque point de laquelle passe une droite, appelée génératrice, contenue dans la surface.

On entend par surface lisse et dépourvue d'éléments saillant, une surface sans aspérité, ni discontinuité.

Comme la paroi de refroidissement 74, 76, la face interne 74A, 76A et la face externe 74B, 76B sont avantageusement en forme de tronc de cône ou de cylindre s'étendant suivant l'axe de rotation R du rotor 32.

Avantageusement, et comme représenté à la figure 2, chaque paroi de refroidissement 74, 76, et donc chaque face interne 74A, 76A et chaque face externe 74B, 76B est en forme de tronc de cône avec une petite base disposée du côté du rotor 32 et une grande base disposée à l'opposé du rotor suivant l'axe de rotation R du rotor. Chaque paroi de refroidissement 74, 76 est alors inclinée par rapport à l'axe de rotation R du rotor et forme avec l'axe de rotation du rotor un angle compris entre 20° et 70° de préférence entre 25° et 55°.

Avantageusement, les parois de refroidissement 74, 76 sont réalisées en un matériau thermiquement conducteur, de préférence en métal.

Par « matériau thermiquement conducteur », il est entendu un matériau présentant une conductivité thermique supérieure à 240 W m⁻¹ K⁻¹.

En particulier, les parois de refroidissement 74, 76 sont réalisées en aluminium.

Le rotor 32 est en outre percé d'au moins un orifice 90 tubulaire traversant.

L'orifice 90 tubulaire traversant du rotor 32 est globalement aligné avec l'axe de rotation R du rotor 32 et présente de préférence un diamètre constant d'une extrémité 32A du rotor 32 à l'autre extrémité 32B.

De préférence, le rotor 32 est percé d'une pluralité d'orifices 90 tubulaires traversants disposés à égale distance radiale de l'axe R du rotor 32.

Par exemple, le rotor 32 est percé de deux à vingt orifices 90, de préférence entre six et seize orifices 90, en particulier dix orifices 90.

Le dispositif de refroidissement 36 comprend au moins un cylindre plein 92 inséré dans l'un des orifices 90 tubulaires traversants du rotor 32 et s'étendant d'une extrémité 32A du rotor 32 à l'autre extrémité 32B.

De préférence, le dispositif de refroidissement 36 comprend une pluralité de cylindres pleins 92 insérés dans les orifices 90 tubulaires traversants du rotor 32 et s'étendant d'une extrémité 32A du rotor 32 à l'autre extrémité 32B.

Chaque cylindre plein 92 est pris en sandwich entre les deux parois de fixation 64, 66 des éléments de refroidissement 60, 62.

Les éléments de refroidissement 60, 62 et chaque cylindre plein 92 sont assemblés de façon étanche, par exemple par soudage, brasage ou frettage.

Chaque cylindre plein 92 présente un diamètre externe sensiblement égal au diamètre interne des orifices 90. Il est entendu qu'il existe un très faible jeu entre le cylindre plein 92 et l'orifice 90 dans lequel il se trouve, le jeu étant notamment compris entre 0,02 mm et 0,08 mm.

Par exemple, le diamètre externe d'un cylindre plein 92 est compris entre 15 mm et 30 mm.

Le diamètre de chaque cylindre plein 92 est calculé au préalable pour tenir compte de l'expansion thermique.

Chaque cylindre plein 92 est réalisé en un matériau thermiquement conducteur. Par exemple, chaque cylindre plein 92 est réalisé en métal, en particulier en aluminium, ou en cuivre, ou en un alliage de ces deux métaux.

Grâce à cet arrangement, les calories dissipées par le rotor 32 en rotation circulent très majoritairement par conduction depuis chaque cylindre plein 92 vers les parois de fixation 64, 66 des éléments de refroidissement 60, 62.

Chaque cylindre plein 92 permet d'extraire les calories sur toute la longueur du rotor 32.

Avantageusement, le dispositif de refroidissement 36 comprend en outre au moins un cylindre creux 94.

De préférence, le dispositif de refroidissement 36 comprend une pluralité de cylindres creux 94 insérés dans les orifices 90 tubulaires traversants du rotor 32 et s'étendant d'une extrémité 32A du rotor 32 à l'autre extrémité 32B.

Chaque cylindre creux 94 est pris en sandwich entre les deux parois de fixation 64, 66 des éléments de refroidissement 60, 62.

Les éléments de refroidissement 60, 62 et chaque cylindre creux 94 sont assemblés de façon étanche, par exemple par soudage, brasage ou frettage.

Chaque cylindre creux 94 présente un diamètre externe légèrement inférieur au diamètre interne des orifices 90. Il est entendu qu'il existe un très faible jeu entre le cylindre creux 94 et l'orifice 90 dans lequel il se trouve, le jeu étant notamment compris entre 0,02 mm et 0,08 mm.

Par exemple, le diamètre externe d'un cylindre creux 94 est compris entre 15 mm et 30 mm.

Le diamètre de chaque cylindre creux 94 est calculé au préalable pour tenir compte de l'expansion thermique.

Chaque cylindre creux 94 est réalisé en un matériau thermiquement conducteur. Par exemple, chaque cylindre creux 94 est réalisé en métal, en particulier en aluminium, ou en cuivre, ou en un alliage de ces deux métaux.

Grâce à cet arrangement, les calories dissipées par le rotor 32 en rotation circulent très majoritairement par conduction depuis chaque cylindre creux 94 vers les parois de fixation 64, 66 des éléments de refroidissement 60, 62.

Chaque cylindre creux 94 permettent d'extraire les calories sur toute la longueur du rotor 32 et sont plus légers que les cylindres pleins 92.

De préférence, chaque orifice 90 tubulaire traversant est comblé par un cylindre, plein 92 ou creux 94.

De préférence encore, chaque cylindre plein 92 alterne avec un cylindre creux 94 autour de l'axe R du rotor 32.

Avantageusement, chaque roulement 56, 57 est disposé dans l'espace primaire respectif 80A, 82A de réception d'air extérieur, relié aérauliquement aux orifices de refroidissement 50, 52. Cela permet de limiter l'apport de chaleur à l'intérieur du bâti 30 du moteur 22 et de protéger les roulements 56, 57.

Le fonctionnement du moteur 22 et notamment du refroidissement du moteur 22 est à présent décrit en référence à la figure 2.

Lorsque le véhicule ferroviaire 10 est en mouvement et que les moteurs électriques 22 sont en marche, le rotor 32 de chaque moteur 22 tourne afin de mettre en mouvement les essieux 20 des bogies 16, 18. Dans chaque moteur électrique 22, le rotor 32 et le stator 34 dégagent alors de la chaleur qui, lorsqu'elle est trop importante, peut influer sur les performances du moteur électrique 22, notamment en usant les roulements 56, 57.

Cependant, grâce au dispositif de refroidissement 36, qui est solidaire du rotor 32, les calories du stator 32 sont évacuées depuis le rotor 32 vers le ou chaque tube 92, 94, et depuis chaque tube 92, 94 vers les éléments de refroidissement 60, 62 par conduction.

En outre, lorsque le rotor 32 tourne, l'air dans l'espace intérieur E1 est refroidi et donc le rotor 32 et le stator 34 sont refroidis par convection.

Plus précisément, les éléments de refroidissement 60, 62 tournent et donc les parois de refroidissement 74, 76 tournent, ce qui provoque une circulation d'air. La circulation d'air se fait via les orifices de refroidissement 52 du côté opposé à la saillie de l'arbre 54 hors du bâti 50, depuis l'espace extérieur E2 vers l'espace intérieur E1 et notamment vers l'espace primaire 82A, puis depuis l'espace intérieur E1 et notamment l'espace primaire 82A vers les canaux de refroidissement 75 définis par l'élément de refroidissement 76 puis dans le ou chaque canal de refroidissement 53 défini par les parois latérales externes 40, 42 et longitudinale externe 44 avec les parois latérales internes 46, 48 et longitudinale interne 49 du bâti 30, puis vers les orifices de refroidissement 50 du côté duquel l'arbre 54 fait saillie hors du bâti 30, puis depuis les orifices de refroidissement 50 vers l'espace extérieur E2.

Ainsi, les deux parois de refroidissement 74, 76 et le ou chaque tube 92, 94 forment un ensemble homogène capable d'évacuer les calories des deux côtés du moteur 22.

L'extraction et l'évacuation de chaleur à l'intérieur du moteur 22, qui est un moteur fermé, sont améliorées.

Cette fonction est assurée par des cylindres conducteurs de chaleur disposés à l'intérieur de la partie tournante du moteur de traction.

Le dispositif de refroidissement 36 permet d'extraire et de transmettre les calories par conduction aux deux parois de refroidissement 74, 76 séparant l'espace intérieur E1 de l'espace extérieur E2. Les calories sont ensuite évacuées par convection vers l'espace extérieur E2, de préférence par un flux d'air traversant le moteur 22 de part en part.

Ainsi, l'échauffement du rotor 32 et du stator 34 est maintenu dans des gammes de chaleur permettant un fonctionnement optimal du moteur électrique 22.

De plus, la présente invention présente comme avantage d'être simple en termes de structure et peu coûteuse à mettre en œuvre. En effet, la structure du dispositif de refroidissement 36 est relativement simple.

Les modes de réalisation et variantes envisagés ci-dessus sont propres à être combinés entre eux pour donner lieu à d'autres modes de réalisation de l'invention.

## Revendications

1. Moteur électrique (22) comprenant un rotor (32), un stator (34), un dispositif de refroidissement (36) et un bâti (30),
le bâti (30) définissant un espace intérieur (E1) de réception du rotor (32), du stator (34) et du dispositif de refroidissement (36), le bâti (30) comprenant au moins un orifice de refroidissement (50, 52) reliant l'espace intérieur (E1) à un espace (E2) extérieur au bâti (30), le rotor (32) comprenant deux extrémités (32A, 32B) opposées suivant un axe de rotation (R) du rotor (32),
le dispositif de refroidissement (36) comprenant au moins un élément de refroidissement (60, 62) disposé à chacune des extrémités (32A, 32B) du rotor (32), chaque élément de refroidissement (60, 62) comprenant une paroi (64, 66) de fixation au rotor (32), solidaire en rotation du rotor (32), et une paroi de refroidissement (74, 76) s'étendant, le long de l'axe de rotation (R) du rotor (32), depuis la paroi de fixation (64, 66) jusqu'à une extrémité libre (70, 72) de l'élément de refroidissement (60, 62), la paroi de refroidissement (74, 76) délimitant un volume interne (79) qu'elle entoure au moins partiellement et comprenant une face interne (74A, 76A) en regard du ou de l'un des orifices de refroidissement (50, 52) et propre à être en contact avec un flux d'air traversant l'orifice de refroidissement (50, 52) et une face externe (74B, 76B) en regard du stator (34), opposée à la face interne (74A, 76A), la face interne et la face externe s'étendant depuis la paroi de fixation (64, 66) jusqu'à l'extrémité libre (70, 72),
**caractérisé en ce que** le rotor (32) comprend au moins un orifice (90) tubulaire traversant s'étendant globalement parallèlement à l'axe de rotation (R) du rotor (32), et **en ce que** le dispositif de refroidissement (36) comprend au moins un cylindre plein (92) inséré dans l'au moins un orifice (90) tubulaire traversant et s'étendant d'une extrémité (32A) du rotor (32) à l'autre extrémité (32B) en étant pris en sandwich entre les deux parois de fixation (64, 66) des éléments de refroidissement (60, 62).

2. Moteur électrique (22) selon la revendication 1, dans lequel chaque cylindre plein (92) est réalisé en un matériau présentant une conductivité thermique supérieure à 240 W m⁻¹ K⁻¹.

3. Moteur électrique (22) selon la revendication 1 ou 2, dans lequel le rotor (32) comprend au moins une pluralité d'orifices (90) tubulaires traversants s'étendant globalement parallèlement à l'axe de rotation (R) du rotor (32), et en ce que le dispositif de refroidissement (36) comprend au moins un cylindre creux (94) inséré dans l'un des orifices (90) tubulaires traversants et s'étendant d'une extrémité (32A) du rotor (32) à l'autre extrémité (32B) et pris en sandwich entre les deux parois de fixation (64, 66) des éléments de refroidissement (60, 62).

4. Moteur électrique (22) selon l'une quelconque des revendications 1 à 3, dans lequel chaque orifice (90) tubulaire traversant du rotor (32) est comblé par un cylindre respectif, plein (92) ou creux (94).

5. Moteur électrique (22) selon l'une quelconque des revendications 1 à 4, dans lequel le moteur (22) comprend au moins deux roulements (56, 57) entourant l'arbre (54) de part et d'autre du rotor (32) suivant l'axe de rotation (R) du rotor (32), chaque roulement (56, 57) étant disposé dans le volume interne (79) de la paroi de refroidissement (74, 76) respective.

6. Moteur électrique (22) selon l'une quelconque des revendications 1 à 5, dans lequel le bâti (30) comprend deux parois latérales externes opposées (40, 42) s'étendant globalement perpendiculairement à l'axe (R) de rotation du rotor (32), au moins une paroi circonférentielle longitudinale externe (44), s'étendant autour de l'axe (R) de rotation du rotor (32), deux parois latérales internes (46, 48) opposées s'étendant globalement perpendiculairement à l'axe (R) de rotation du rotor (32), et au moins une paroi circonférentielle longitudinale interne (49), s'étendant autour de l'axe (R) de rotation du rotor (32), et dans lequel les parois latérales externes (40, 42) et circonférentielle longitudinale externe (44) définissent avec les parois latérales internes (46, 48) et circonférentielle longitudinale interne (49) au moins un canal de refroidissement (53).

7. Moteur électrique (22) selon la revendication 6, dans lequel au moins l'un des éléments de refroidissement (62) présente une extrémité libre (73) disposée en regard de la paroi latérale externe (42) du bâti (30) respective et une extrémité libre (72) en regard de la paroi latérale interne (48) respective, et dans lequel l'extrémité libre (72) en regard de la paroi latérale interne (48) et l'extrémité libre (73) en regard de la paroi latérale externe (42) définissent entre elles au moins un canal de refroidissement (75).

8. Moteur électrique (22) selon la revendication 7, dans lequel l'extrémité libre (72) en regard de la paroi latérale interne (48) et l'extrémité libre (73) en regard de la paroi latérale externe (42) définissent entre elles une pluralité de canaux de refroidissement (75) séparés par des lames (75A).

9. Moteur électrique (22) selon la revendication 8, dans lequel les lames (75A) sont biseautées, avec une petite base disposée à l'opposé du rotor (32) suivant l'axe de rotation (R) du rotor (32) et une grande base disposée du côté du rotor (32).

10. Véhicule ferroviaire (10) comprenant au moins un moteur électrique (22) selon l'une quelconque des revendications précédentes.
